(19) Europäisches Patentamt
European Patent Office
Office européen des brevets

(11) **EP 3 700 062 A1**

(12) **EUROPEAN PATENT APPLICATION**
published in accordance with Art. 153(4) EPC

(43) Date of publication:
**26.08.2020 Bulletin 2020/35**

(51) Int Cl.:
*H02K 1/27* (2006.01)    *H02K 1/22* (2006.01)
*H02K 21/14* (2006.01)

(21) Application number: **18867850.2**

(22) Date of filing: **22.08.2018**

(86) International application number:
**PCT/JP2018/031006**

(87) International publication number:
**WO 2019/077868 (25.04.2019 Gazette 2019/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.10.2017   JP 2017201635**

(71) Applicant: **Hitachi Industrial Products, Ltd. Tokyo 1010022 (JP)**

(72) Inventors:
• **ITO, Makoto**
**Tokyo 100-8280 (JP)**
• **TAKAHASHI, Akeshi**
**Tokyo 100-8280 (JP)**
• **SUGIMOTO, Shinji**
**Tokyo 100-8280 (JP)**
• **TAMIYA, Shuichi**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **ROTARY ELECTRIC MACHINE AND MOTOR VEHICLE PROVIDED THEREWITH**

(57)    There is provided a rotary electric machine capable of reducing leakage flux from the bridge. A core region A disposed at an inner circumferential side to a hole 40 and a core region B disposed at an outer circumferential side to the hole 40 are mechanically connected with at least two bridges including a first bridge 51 and a second bridges, which are circumferentially separated from a magnetic pole center. When setting a distance between connected portions 102 of the first bridge 51 and the second bridge 52 to the core region A to L1, and a distance between connected portions 101 of the first bridge 51 and the second bridge 52 to the core region B to L2, a relation of L2 < L1 is satisfied. When setting an angle at the side of the magnetic pole center C formed by the first bridge 51 and an inner circumferential surface of the core region B to θ1, and an angle at the side of the magnetic pole center C formed by the second bridge 52 and the inner circumferential surface of the core region B to θ2, relations of θ1 > 90°, θ2 > 90° are satisfied. When setting a distance between circumferential ends of the core region B to L3, a relation of L2 < L3 is satisfied.

*FIG. 3*

EP 3 700 062 A1

**Description**

Technical Field

The present invention relates to a rotary electric machine and a motor vehicle provided therewith.

Background Art

A generally employed rotary electric machine using a permanent magnet is configured to reduce the electric current flowing in the coil by utilizing the residual magnetic flux of the permanent magnet for generating torque so that the rotary electric machine is made compact and highly efficient. Some of the magnetic line penetrating through the permanent magnet may intersect the coil, which is called armature interlinkage flux, contributing to generation of torque. Meanwhile, the magnetic line penetrating through the permanent magnet may contain leakage flux that does not intersect the coil, nor contribute to generation of torque. In order to make the rotary electric machine compact and highly efficient, it is necessary to provide the structure for reducing the leakage flux, and effectively utilizing the residual magnetic flux of the permanent magnet.

When using the permanent magnet for the rotor, centrifugal force generated by rotation of the rotor is applied to the permanent magnet. Therefore, the rotor is required to be configured to mechanically support the centrifugal load of the permanent magnet. Especially, the embedded magnet synchronous rotary electric machine having the permanent magnet embedded in the rotor core requires the bridge for mechanically supporting the centrifugal load of the permanent magnet. The bridge that is integrally formed with the rotor core is likely to pass the magnetic flux.

A part of the magnetic line that penetrates through the permanent magnet becomes the leakage flux while having the permanent magnet and the bridge only short-circuited.

The leakage flux passing through the bridge is generated until the relative permeability of the bridge approximates to 1 to magnetically saturate the bridge. It is necessary to facilitate the magnetic saturation by narrowing the bridge width for reducing the leakage flux passing through the bridge. The above-described circumstance causes the problem of difficulty in securing sufficient strength for the mechanical support.

The synchronous rotary electric machine in which the magnet is not used for the rotor also has the similar problem. In the case of the synchronous rotary electric machine, the flux barrier may be provided for enlarging a difference between the d-axis inductance and the q-axis inductance. Especially in the case of the synchronous reluctance motor or the like, the use of the flux barrier isolates the core. Accordingly, the bridge is required for mechanically supporting the centrifugal load. Generally, as the amount of magnetic flux passing through the bridge increases, the difference between the d-axis inductance and the q-axis inductance is made small. As a result, the motor torque becomes small. In order to make up the deficiency of the motor torque, the electric current has to be increased. This makes it difficult to accomplish the compact and highly efficient rotary electric machine.

PTL 1 discloses the structure for reducing the leakage flux from the bridge of the rotor, for example, the technique that allows the non-magnetic body to partially constitute the bridge to be formed as the leakage path of the magnetic flux for reducing the leakage flux.

PTL 2 discloses the technique for reducing the stress applied to the bridge by making the angle formed by the line of the magnetic pole center and the line passing along the bridge connecting direction smaller than the angle formed by the line of the magnetic pole center and the line connecting the rotary axial center of the rotor and the bridge.

PTL 3 discloses the technique for elongating the magnetic flux path from the permanent magnet through which the bridge passes by elongating the bridge so that the leakage flux is reduced.

PTL 4 discloses technique for improving the strength of the bridge, specifically, the technique for extending the bridge in the normal direction to the outer peripheral surface of the magnet slot for the purpose of suppressing deformation of the rotor core caused by injection molding of the bond magnet.

Citation List

Patent Literature

PTL 1: Japanese Patent Application Laid-Open No. Hei 9-163648
PTL 2: Japanese Patent Application Laid-Open No. 2013-236418
PTL 3: Japanese Patent Application Laid-Open No. 2011-97783
PTL 4: Japanese Patent Application Laid-Open No. 2014-57392

Summary of Invention

Technical Problem

In the structure disclosed in PTL 1, the non-magnetic body is more unlikely to pass the magnetic flux than the magnetic body. Even if the bridge width is widened to secure sufficient mechanical strength, the leakage flux from the bridge may be reduced. However, additional process steps are required for processing both the rotor core and the non-magnetic body, and further combining them. This may cause the problem of increasing manufacturing costs.

In the technique disclosed in PTL 2, the bridge connecting direction is made parallel to the line of the magnetic pole center so that the centrifugal force applied to the bridge is directed toward the connecting direction. As a result, tensile stress is mainly applied to the bridge, and the bending stress is made small. This concept assumes the use of the rotor core as the rigid body. Actually, however, the rotor core elastically deforms. If the deformation mode of the bridge varies in association with the elastic deformation of the rotor core, the above-described structure cannot reduce the bending stress. Especially, when the rotating speed is high, or the radial thickness of the rotor core at the outer circumferential side is small, the rotor core is likely to be elastically deformed under the centrifugal action. The large bending stress may be applied to the bridge, causing the problem of insufficient mechanical strength.

In the technique disclosed in PTL 4, the uniform pressure is generated both in the inner slot and the outer slot when executing injection molding of the bond magnet to the inner slot and the outer slot. As the outer peripheral surface of the magnet slot vertically intersects the bridge, compression and the tensile stress are mainly applied to the bridge. Accordingly, it is assumed that the bending stress is reduced. Meanwhile, if the centrifugal force is applied to the rotor radially from the rotary center, the centrifugal force applied to the permanent magnet of the inner slot becomes different in the direction and magnitude from the centrifugal force applied to the permanent magnet of the outer slot. In the case of the structure having the outer peripheral surface of the magnet slot vertically intersecting the bridge, the bending stress occurs in the bridge. Narrowing the bridge to reduce the leakage flux may cause the problem of insufficient mechanical strength.

In the technique disclosed in PTL 3, the permanent magnet is embedded closer to the rotor inner diameter side than the contact between the rotor core at the outer peripheral side and the bridge so that the bridge is elongated. Elongation of the bridge further elongates the magnetic flux path from the permanent magnet so that the leakage flux is reduced.

However, embedding of the permanent magnet at the inner diameter side of the rotor increases the rotor core mass at the outer circumferential side. The centrifugal load applied to the bridge is increased. It is therefore necessary to expand the bridge width. Elongation of the bridge has caused the problem of increasing the leakage flux by the amount corresponding to the increased bridge width.

As described above, the structure using the non-magnetic body in place of the bridge, the structure that elongates the bridge, and the structure that restricts the inclination of the bridge have been conventionally proposed as the structure for reducing the leakage flux from the bridge. The use of the non-magnetic body in place of the bridge causes the problem of cost increase. The structure that elongates the bridge widens the bridge width owing to increase in the core load to cause the problem of increase in the leakage flux. The structure that restricts the bridge inclination assumes the use of the rotor core as the rigid body. The structure for reducing the leakage flux in consideration of elasticity of the actual rotor core has not been proposed before.

In the above-described circumstances, it is an object of the present invention to provide a rotary electric machine for narrowing the bridge width in consideration of the deformation mode around the bridge owing to elasticity of the rotor core so that the leakage flux from the bridge is reduced.

Solution to Problem

In order to solve the above-described problems, the present invention provides a rotary electric machine including a stator, a rotor provided with a rotor core formed of a magnetic body, and a shaft fixed to the rotor. The rotor core has at least one hole for a single magnetic pole disposed circumferentially, a core region A disposed at an inner circumferential side to the hole, and a core region B disposed at an outer circumferential side to the hole. The core region A and the core region B are mechanically connected with at least two bridges including a first bridge and a second bridge, which are circumferentially separated from a magnetic pole center. When setting a distance between connected portions of the first bridge and the second bridge to the core region A to L1, and a distance between connected portions of the first bridge and the second bridge to the core region B to L2, a relation of L2 < L1 is satisfied. When setting an angle at a side of the magnetic pole center formed by the first bridge and an inner circumferential surface of the core region B to θ1, and an angle at the side of the magnetic pole center formed by the second bridge and the inner circumferential surface of the core region B to θ2, relations of θ1 > 90°, θ2 > 90° are satisfied. When setting a distance between circumferential ends of the core region B to L3, a relation of L2 < L3 is satisfied.

In accordance with characteristics of the present invention, a rotary electric machine includes a stator, a rotor provided with a rotor core formed of a magnetic body, and a shaft fixed to the rotor. The rotor core has at least one magnet insertion hole for a single magnetic pole disposed circumferentially, a core region A disposed at an inner circumferential side to the magnet insertion hole, and a core region B disposed at an outer circumferential side to the magnet insertion hole. A permanent magnet is inserted into the magnet insertion hole. The core region A and the core region B are mechanically connected with at least two bridges including a first bridge and a second bridge, which are circumferentially separated from a magnetic pole center. When setting a distance between connected portions of the first bridge and the second bridge to the core region A to L1, and a distance between connected portions of the first bridge and the second bridge to the core region B to L2, a relation of L2 < L1 is satisfied. When setting an angle at a side of the magnetic pole center formed by the first bridge and an inner circumferential side of the core region B to $\theta 1$, and an angle at the side of the magnetic pole center formed by the second bridge and the inner circumferential surface of the core region B to $\theta 2$, relations of $\theta 1 > 90°$, $\theta 2 > 90°$ are satisfied. When setting a distance between circumferential ends of the core region B to L3, a relation of L2 < L3 is satisfied.

Advantageous Effects of Invention

According to the present invention, the rotary electric machine capable of reducing the leakage flux from the bridge may be provided.

Brief Description of Drawings

Figure 1 is a sectional view of a plane parallel to a rotary shaft of a rotary electric machine of Example 1 according to the present invention.
Figure 2 is a sectional view of a plane perpendicular to the rotary shaft of the rotor of Example 1 according to the present invention.
Figure 3 is a partial sectional view of the plane perpendicular to the rotary shaft of the rotor of Example 1 according to the present invention.
Figure 4 is a sectional view of a plane perpendicular to a rotary shaft of a rotor of Example 1 according to the present invention.
Figure 5 is a sectional view of a plane perpendicular to the rotary shaft of the rotor of Example 1 according to the present invention.
Figure 6 is a partial sectional view of the plane perpendicular to the rotary shaft of the rotor of Example 1 according to the present invention.
Figure 7 is a view illustrating a cantilever model for calculating a stress generated in a first bridge and a second bridge.
Figure 8 is a sectional view of a plane perpendicular to a rotary shaft of a rotor according to a comparative example.
Figure 9 is a view representing each change in the force and the bending moment applied to the rotor of Example 1 according to the present invention.
Figure 10 is a view illustrating results of stress analysis for each magnetic pole by comparing the stress distribution to the centrifugal load of the structure between the comparative example and the example.
Figure 11 is a sectional view of a plane perpendicular to a rotary shaft of a rotor of Example 1 according to the present invention.
Figure 12 is a sectional view of a plane perpendicular to the rotary shaft of the rotor of Example 1 according to the present invention.
Figure 13 is a sectional view of a plane perpendicular to a rotary shaft of a rotor of Example 1 according to the present invention.
Figure 14 is a sectional view of a plane perpendicular to a rotary shaft of a rotor of Example 1 according to the present invention.
Figure 15 is a sectional view of a plane perpendicular to the rotary shaft of the rotor of Example 1 according to the present invention.
Figure 16 is a sectional view of a plane perpendicular to a rotary shaft of a rotor of Example 1 according to the present invention.
Figure 17 is a sectional view of a plane perpendicular to a rotary shaft of a rotor of Example 1 according to the present invention.
Figure 18 is a schematic view of a motor vehicle provided with a rotary electric machine of Example 1 according to the present invention.

Description of Embodiments

Examples according to the present invention will be described in detail referring to the drawings. A plurality of examples according to the present invention are proposed as mere exemplified cases. There is no intention to limit the present invention to those specific examples.

<Example 1>

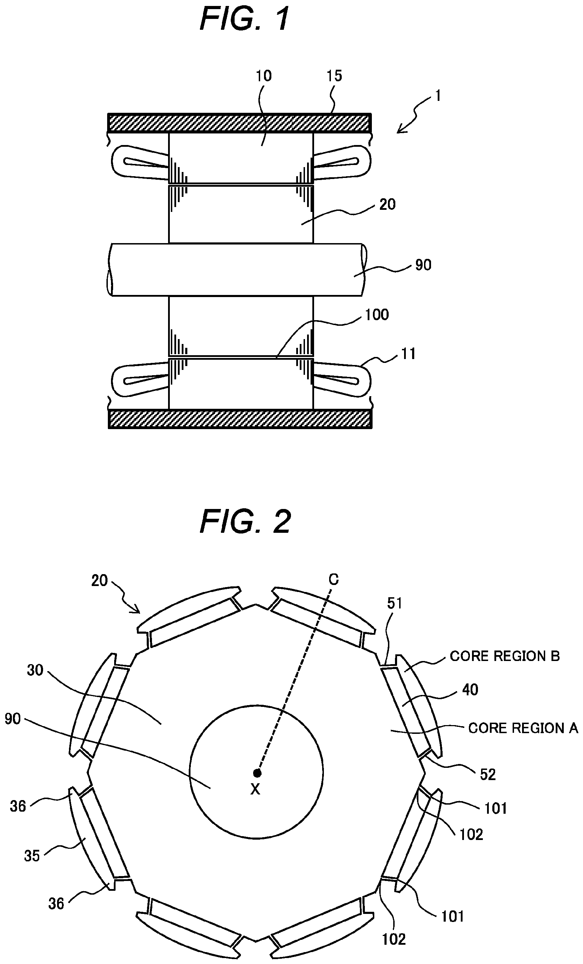

A rotary electric machine of Example 1 according to the present invention will be described referring to Figures 1 to 10. Figure 1 is a sectional view of a plane parallel to a rotary shaft of the rotary electric machine of Example 1 according to the present invention. Figure 2 is a sectional view of a plane perpendicular to a rotary shaft of a rotor of Example 1 according to the present invention.

Referring to Figure 1, a rotary electric machine 1 includes a stator 10, a rotor 20 rotatably supported radially at an inner side of the stator 10, a shaft 90 fixed to the rotor 20, and a frame 15 that covers the stator 10 and the rotor 20. The rotor 20 is rotatably supported to the stator 10 via a gap 100. The stator 10 includes a stator core 11 wound to a stator slot.

Referring to Figure 2, the rotor 20 rotates around a rotary axial center X. In the specification, terms "inner circumferential side" and "outer circumferential side" represent the "proximal side to the rotary axis X" and the "distal side to the rotary axial center X, respectively". The term "radial direction" represents the linear direction perpendicularly intersecting the rotary axial center X, and the term "circumferential direction" represents the rotating direction around the rotary axial center X.

As Figure 2 shows, the rotor 20 includes a rotor core 30 as a magnetic body, and a shaft 90 penetrating through the rotor core 30 as the rotary shaft of the rotor 20. The rotor 20 includes the even number of (8 as shown in Figure 2) magnetic poles. Each magnetic pole has at least one hole 40. The rotor core 30 includes a core region A at the inner circumferential side to the hole 40, and a core region B at the outer circumferential side to the hole 40. The core region A and the core region B of each of the respective magnetic poles are mechanically connected with at least two bridges, that is, a first bridge 51 and a second bridge 52, which are circumferentially separated from a magnetic pole center C interposed between those bridges. The hole 40 is defined by the first bridge 51, the second bridge 52, the core region A and the core region B.

It is preferable to use a laminated steel sheet produced through lamination of an electrical insulator for forming the rotor core 30 so that eddy current loss in the rotor core 30 is reduced. However, it is also possible to use a solid magnetic body so that material costs and processing costs are reduced. The rotor core 30 is fixed to the shaft 90 through such method as adhesion, welding, press-in, shrinkage fitting and the like. When using the solid magnetic body for forming the rotor core 30, the rotor core 30 may be integrally molded with the shaft 90. Referring to Figure 2, the hole 40 has a cross-section of substantially trapezoidal shape. However, the hole may have an arbitrary shape, for example, substantially triangular or circular shape so long as the hole separates the core region A from the core region B.

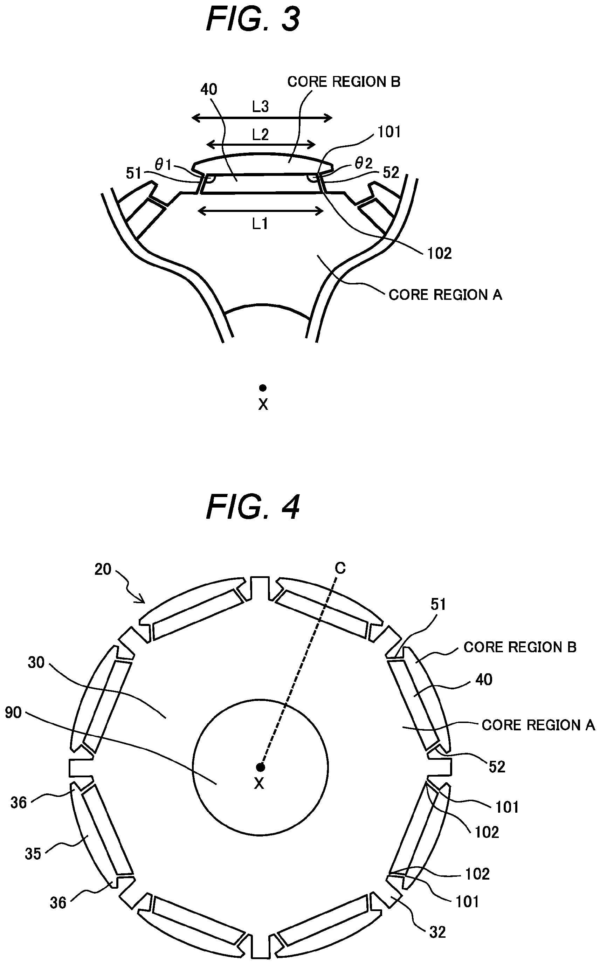

A structure of the example will be described referring to Figure 3. Figure 3 is a partial sectional view of a plane perpendicular to the rotary shaft of the rotor of Example 1 according to the present invention.

The first bridge 51 and the second bridge 52 are separated from each other from the magnetic pole center C interposed therebetween (Figure 2). Assuming that a distance between connected portions 102 of the first bridge 51 and the second bridge 52 to the core region A is designated as L1, and a distance between connected portions 101 of the first bridge 51 and the second bridge 52 to the core region B is designated as L2, in the structure of this example, the distance L2 is shorter than the distance L1, that is, L2 < L1.

Assuming that an angle at a side of the magnetic pole center C formed by the first bridge 51 and a boundary surface of the hole 40 at the inner circumferential side of the core region B (hereinafter referred to as an inner circumferential surface) is designated as $\theta1$, and an angle at the side of the magnetic pole center C formed by the second bridge 52 and the inner circumferential surface of the core region B is designated as $\theta2$, each of the angles $\theta1$ and $\theta2$ is obtuse, thus establishing relations of $\theta1 > 90°$, $\theta2 > 90°$.

Additionally, assuming that a distance between circumferential ends of the core region B is designated as L3, the distance L2 is shorter than the distance L3, thus establishing the relation of L2 < L3.

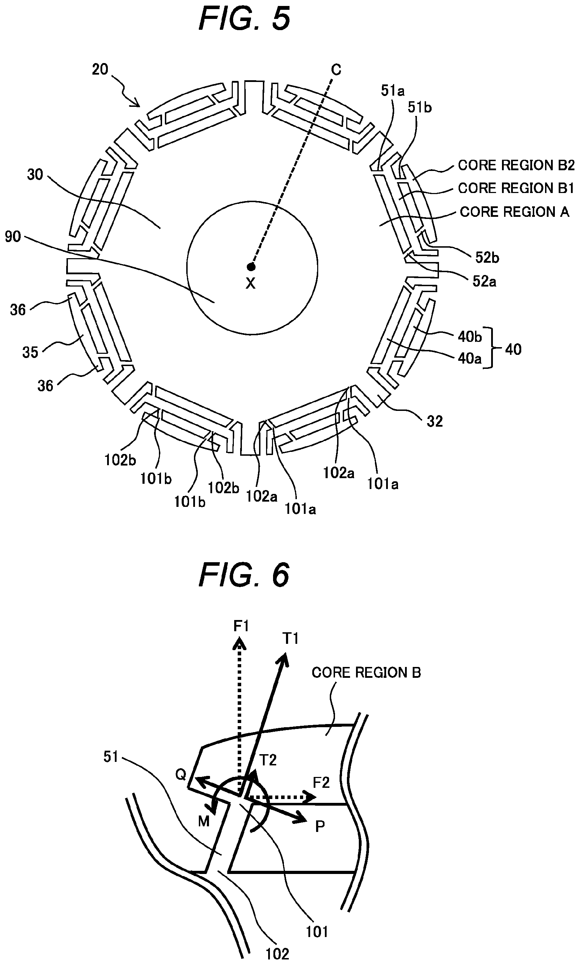

Referring to Figures 2 and 3, the core region A has substantially a regular octagonal shape. However, the core region may be formed to have a circular shape, and substantially a gear shape as shown in Figures 4 and 5 so long as the relationships as described above are established. A detailed explanation will be made later referring to Figures 4 and 5.

The core region B may be arbitrarily shaped to have one of circumferential ends of the core region B either at the inner circumferential side or the outer circumferential side longer than the other. The distance L3 is defined as a distance between circumferential ends of the core region B, either at the inner or outer circumferential side whichever is longer than the other. Referring to Figures 2 to 5, each of the first bridge 51 and the second bridge 52 is formed to have substantially a rectangular shape with constant radial width. However, it may be formed to have a circular shape, or formed to have the radial width that is not kept constant.

An operation of the example will be described. Rotation of the rotor 20 applies centrifugal force to the respective parts of the rotor core 30. Under the centrifugal force, the core region B starts separating from the core region A. Then tensile force is applied to the first bridge 51 and the second bridge 52 in substantially radial direction for mechanically connecting the core region A and the core region B. Assuming that the rotor core 30 constitutes the rigid body, deformation of the core region A, the core region B, the first bridge 51, and the second bridge 52 is ignorable. Therefore, only the tensile force toward the magnetic pole center C of the respective magnetic poles is applied to the first bridge 51 and the second bridge 52. Conventionally, as it has been technically assumed that the rotor core 30 constitutes the rigid body, the tensile force toward the magnetic pole center C may only be considered as the force applied to the respective bridges.

However, the assumption that the rotor core 30 constitutes the rigid body is no longer appropriate for correctly evaluating the actual stress distribution on the rotor core 30. It is therefore necessary to consider elasticity of the core material.

Upon reception of the centrifugal force, the core region B starts separating from the rotary axial center X, and simultaneously, the connected portions 101 of the first bridge 51 and the second bridge 52 receive the tensile force in the inner radial direction from the first bridge 51 and the second bridge 52. In the core region B, the connected portions 101 are brought to the inner radial side. As a result, the core region B between the connected portions 101 of the first bridge 51 and the second bridge is deformed into an arcuate shape while being brought to the outer circumferential side. The deformation of the core region B applies the tensile force, shear force, and bending moment to the first bridge 51 and the second bridge 52. Figure 6 shows the force and the bending moment applied to the first bridge 51 and the second bridge 52.

Figure 6 is a partial sectional view of the plane perpendicular to the rotary shaft of the rotor 20 of Example 1 according to the present invention. Figure 6 shows the force and the moment applied to the first bridge 51 to the connected portion 101 as a support point in a partial sectional view.

A force F1 under the centrifugal action to the core region B is applied to the first bridge 51 and the second bridge 52. The force F1 is generated even on the assumption that the core region B constitutes the rigid body, and parallel to the magnetic pole center C of the respective magnetic poles. In the example, as the first bridge 51 and the second bridge 52 establish the relations of L2 < L1, and θ1 > 90°, θ2 > 90°, the force F1 may be decomposed into the component of tensile force T1 and the component of shear force Q to each of the first bridge 51 and the second bridge 52, respectively. Considering elasticity of the rotor core 30, in association with the arcuate deformation of the core region B, the first bridge 51 and the second bridge 52 receive a force F2 to reduce the distance L2. Like the force F1, the force F2 may be decomposed into the component of tensile force T2 and the component of shear force P. As the core region B is deformed into the arcuate shape while bending to the connected portion 101 as an axis, the bending moment M is applied to the first bridge 51 and the second bridge 52.

Referring to Figure 6, the counterclockwise bending moment M is applied to the connected portion 101 of the first bridge 51 located to the left of the magnetic pole center C. The clockwise bending moment M is applied to the connected portion 101 of the second bridge 52 located to the right of the magnetic pole center C. Therefore, the first bridge 51 and the second bridge 52 receive the tensile forces T1, T2, the shear forces P, Q, and the bending moments M, respectively.

The stress generated in the first bridge 51 and the second bridge 52 will be described. The core region A is located at the inner circumferential side of the rotor 20, and integrally connected to the respective poles. The deformation amount of the core region A is smaller than that of the core region B. The first bridge 51 and the second bridge 52 may be regarded as a cantilever having connected portions 102 to the core region A as fixed ends, and the connected portions 101 to the core region B as free ends.

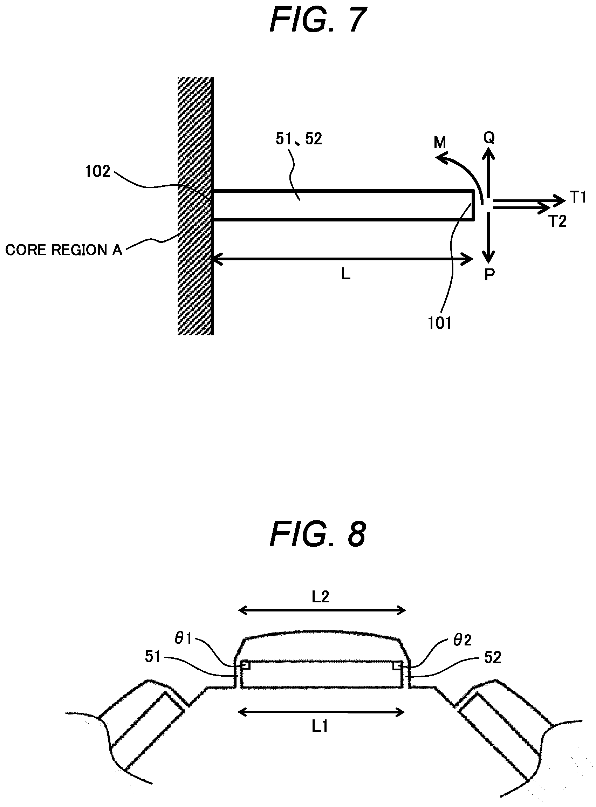

Figure 7 illustrates a cantilever model for calculating the stress generated in the first bridge 51 and the second bridge 52. The length from the connected portion 101 of the first bridge 51 or the second bridge 52 to the connected portion 102, that is, the length of a beam is designated as L. It is assumed that various forces and the bending moment applied to the first bridge 51 or the second bridge 52 act as illustrated in Figure 7. At this time, the bending moment with magnitude M is generated at the connected portion 101, and the bending moment with -(P-Q)L+M is generated at the connected portion 102. The bending stress distribution linearly varies in the range from the connected portion 101 to the connected portion 102. Additionally, the tensile force T1+T2 is generated over the entire region of the beam. Therefore, local stress σ1 as expressed by formula 1 is generated at the side of the connected portions 101 of the first bridge 51 and the second bridge 52.

$$\sigma 1 = M/Z + (T1 + T2)/S \quad (\text{formula 1})$$

where Z denotes a section modulus of the first bridge 51 and the second bridge 52, and S denotes a section area of the first bridge 51 and the second bridge 52. At the side of the connected portion 102, local stress σ2 as expressed by a formula 2 is generated.

$$\sigma2 \;=\; |(P-Q)L \;-\; M|/Z \;+\; (T1 \;+\; T2)/S \qquad (formula\ 2)$$

Figure 8 shows a comparative example. Figure 8 is a sectional view of a plane perpendicular to a rotary shaft of a rotor according to the comparative example.

Referring to Figure 8 showing the structure of the comparative example, the first bridge 51 and the second bridge 52 establish the relations of L2 = L1, and θ1 = 90°, θ2 = 90°. The shear force Q and the tensile force T2 are substantially zero. Meanwhile, the shear force P and the tensile force T1 are large. In the case of L2 = L3, the bending moment M upon arcuate deformation of the core region B is large. Accordingly, if the bending moment M is large, the local stress becomes large at the side of the connected portion 101 as expressed by the formula 1. If the shear force P is large, the local stress is likely to become large at the side of the connected portion 102 as expressed by the formula 2.

Meanwhile, in the rotor structure of the example, the first bridge 51 and the second bridge 52 establish the relations of L2 < L1, and θ1 > 90°, θ2 > 90° so that each ratio between the tensile force component and the shear force component of the forces F1 and F2 may be made variable.

Specifically, compared with the structure of the comparative example, the tensile force T1 and the shear force P become small, and the tensile force T2 and the shear force Q become large. Upon establishment of the relation of L2 < L3, the core region B exists at the respective circumferential sides of the connected portions 101. The centrifugal force is applied to a core 35 at the side of the magnetic pole center C in the circumferential direction of the connected portion 101, and a core 36 at the side of q-axis in the circumferential direction. Each rotating direction of bending moments generated by the respective cores to the connected portion 101 becomes opposite each other. Upon establishment of the relation of L2 < L3, the bending moment M becomes small, and the distance L2 becomes shorter compared with the relation of L2 = L3. The arcuate deflection of the core region B is suppressed by the amount corresponding to the reduced length. The force F2 then becomes small, and the tensile force T2 and the shear force P become small as well.

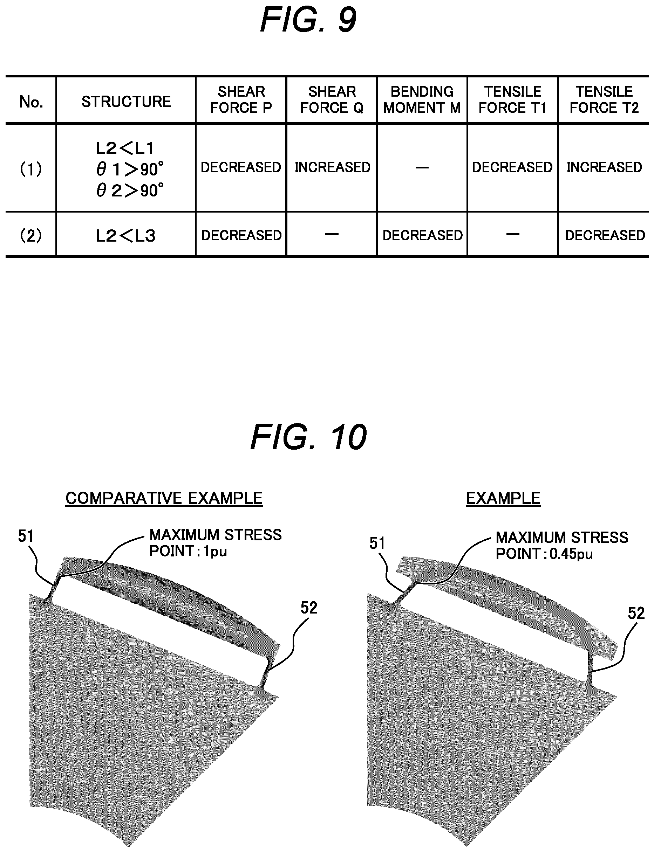

Figure 9 shows the rotor structure of the example, and each change in the resultant forces and the bending moment. Figure 9 is a view representing each change in the force and the bending moment applied to the rotor of Example 1 according to the present invention.

Upon establishment of the relations of L2 < L1, and θ1 > 90°, θ2 > 90°, the term (P-Q)L in the formula 2 becomes small. It is therefore possible to reduce the local stress at the side of the connected portion 102. Upon establishment of the relation of L2 < L3, the bending moment M and the tensile force T2 become small. The value of the formula 1 becomes small, and the local stress at the side of the connected portion 101 may be decreased. In addition to the individual effects, combining the relations of L2 < L1 and θ1 > 90°, θ2 > 90° with the relation of L2 < L3 serves to satisfy the condition formula 3 under the condition that the stress does not concentrate either in one of the connected portion 101 and the connected portion 102, that is, the bending moment component M of the formula 1 becomes equivalent to the bending moment component (P - Q)L - M of the formula 2.

$$2M \;=\; (P \;-\; Q)L \qquad (formula\ 3)$$

In the example, the bending stress applied to the first bridge 51 and the second bridge 52 may be reduced. Each radial width of the first bridge 51 and the second bridge 52 may be narrowed.

In the example, it is possible to reduce the leakage flux from the first bridge 51 and the second bridge 52.

In the example, the leakage flux from the first bridge 51 and the second bridge 52 may be reduced. Compared with the conventional structure for generating the same motor torque, high efficiency may be established by current reduction. Alternatively, in the case of the same amperage as that of the conventional structure and the same configuration, the motor torque becomes large owing to increase in the reluctance torque resulting from the reduced d-axis inductance. By setting the same motor torque, the rotary electric machine may be made compact.

The example does not ensure to establish the formula 3, but bring the left side value and the right side value of the formula 3 close to each other by balancing among the bending moment M, and the shear forces P, Q through application of the structure of the example.

Results of the stress analysis will be described referring to Figure 10. Figure 10 illustrates results of the stress analysis for each magnetic pole by comparing the stress distribution to the centrifugal load of the structure between the comparative example and the example.

In the stress analysis to the structures of the comparative example and the example, the rotor core 30 employs the same material property. Each width of the first bridge 51 and the second bridge 52 in the shorter side direction is equivalent, and each shape of the core region A and the core region B is the same. The resultant stress distributions derived from rotation at the same rotating speed are compared.

The result of analysis indicates decrease in the maximum value of the local stress in the structure of the example to 0.45 compared with the value 1 standardized as the maximum value of the local stress in the structure of the comparative example. From the analysis as described above, it may be confirmed that application of the structure of the example allows reduction in the stress generated in the first bridge 51 and the second bridge 52 as well as thinning of the bridge section.

As described above, assuming that the distance between the connected portions 102 of the first bridge 51 and the second bridge 52 to the core region A is designated as L1, and the distance between the connected portions 101 of the first bridge 51 and the second bridge 52 to the core region B is designated as L2, the relation of L2 < L1 is satisfied. Assuming that the angle at the side of the magnetic pole center C formed by the first bridge 51 and the inner circumferential surface of the core region B is designated as $\theta1$, and the angle at the side of the magnetic pole center C formed by the second bridge 52 and the inner circumferential surface of the core region B is designated as $\theta2$, the relations of $\theta1 > 90°$, $\theta2 > 90°$ are satisfied. Assuming that the distance between the circumferential ends of the core region B is designated as L3, the relation of L2 < L3 is satisfied.

The above-described structure of the example ensures to provide the rotary electric machine having the leakage flux from the bridges reduced.

In the example, the core region A has a substantially regular octagonal shape. However, the core region A may be formed to have a circular shape or other polygonal shape so long as relations expressed by the formulae 1 to 3 are satisfied.

In the example, two bridges, that is, the first bridge 51 and the second bridge 52 are provided. However, an additional bridge may be provided on the magnetic pole center C in the hole 40.

Example 2

An explanation will be made with respect to the case where the shape of the rotor core is varied referring to Figures 4 and 5.

Figures 4 and 5 are sectional views each showing the plane perpendicular to the rotary shaft of the rotor of Example 1 according to the present invention. Explanations overlapped with those of Example 1 will be omitted.

Referring to the structure as shown in Figure 4, a plurality of q-axis cores 32 each protruding radially to the outer circumferential side are disposed between the adjacent core regions B of the plurally provided core regions B.

The q-axis core 32 at the outermost circumference of the core region A has a larger q-axis inductance for passing the magnetic flux, allowing utilization of the reluctance torque. In the conventional structure having the radial width between the first bridge 51 and the second bridge 52 widened, the width of the q-axis core 32 is narrowed. Thus, it has been impossible to sufficiently utilize the reluctance torque.

Meanwhile, in the structure of the example, the radial width between the first bridge 51 and the second bridge 52 may be narrowed so that the width of the q-axis core 32 may be widened. The effect of reducing the leakage flux from the first bridge 51 and the second bridge 52 further reduces the d-axis inductance. Accordingly, in the example, the reluctance torque is increased to secure the large motor torque.

As Figure 5 shows, the core regions B and the holes 40 may be in a radially multi-layered arrangement. Referring to Figure 5, a plurality of holes 40a, 40b are formed at the radial outer circumferential side of the core region A while being in the radially multi-layered arrangement. A plurality of the core regions B1, B2 are formed at the radial outer circumferential side of the respective holes 40a, 40b while being in the radially multi-layered arrangement. Like the structure as shown in Figure 4, the plurality of q-axis cores 32 are formed, each protruding radially to the outer circumferential side between the adjacent core regions B.

Furthermore, the first bridges 51 (51a, 51b) and the second bridges 52 (52a, 52b) are radially in a multi-staged arrangement. Additionally, the connected portions 101 (101a, 101b) and the connected portions 102 (102a, 102b) are also radially in the multi-staged arrangement.

Referring to Figure 5, the first bridge 51b and the second bridge 52b are separated while having the magnetic pole center C interposed therebetween. Assuming that the distance between the connected portions 102b of the first bridge 51b and the second bridge 52b to the core region B1 is designated as L1, and the distance between the connected portions 101b of the first bridge 51b and the second bridge 52b to the core region B2 is designated as L2, in the structure of the example, the distance L2 is shorter than the distance L1, thus establishing the relation of L2 < L1.

Assuming that an angle at the side of the magnetic pole center C formed by the first bridge 51b and a boundary surface of the hole 40b at the inner circumferential side of the core region B2 (hereinafter referred to as an inner circumferential surface) is designated as $\theta1$, and an angle at the side of the magnetic pole center C formed by the second bridge 52b and the inner circumferential surface of the core region B2 is designated as $\theta2$, each of the angles $\theta1$ and $\theta2$ is obtuse, thus establishing the relations of $\theta1 > 90°$, $\theta2 > 90°$.

Additionally, assuming that a distance between the circumferential ends of the core region B2 is designated as L3, the distance L2 is shorter than the distance L3, thus establishing the relation of L2 < L3.

In the example, in addition to the above-defined distances L1, L2, L3, and angles θ1, θ2, the distance between the connected portions 102a of the first bridge 51b and the second bridge 52b while being separated from the magnetic pole center C interposed therebetween to the core region A may be designated as L1, the distance between the connected portions 101a of the first bridge 51a and the second bridge 52a to the core region B1 may be designated as L2, and the distance between the circumferential ends of the core region B1 may be designated as L3. Similarly, an angle at the side of the magnetic pole center C formed by the first bridge 51a and a boundary surface of the hole 40a at the inner circumferential side of the core region B1 (hereinafter referred to as an inner circumferential surface) may be designated as θ1, and an angle at the side of the magnetic pole center C formed by the second bridge 52a and the inner circumferential surface of the core region B1 may be designated as θ2. As for the shape of the core region B1, any one of the inner circumferential end and the outer circumferential end may be longer. The L3 is defined as the distance between the circumferential ends of the core region B1 either at the inner circumferential side or the outer circumferential side whichever is longer. In this case, relations of the defined distances L1, L2, L3 and the angles θ1, θ2, specifically, L2 < L1, θ1 > 90°, θ2 > 90°, and L2 < L3 are established.

Similarly, if the first bridge 51 and the second bridge 52 are formed, the distances L1, L2, L3, and the angles θ1, θ2 may be defined for any of the core regions B and the holes 40. The effect of the example may be obtained for at least one of the core regions B and one of the holes 40 so long as the relations of L2 < L1, θ1 > 90°, θ2 > 90°, L2 < L3 are established.

The structure having the first bridges 51 and the second bridges 52 radially in multi-staged arrangement as shown in Figure 5 has been generally used as the synchronous reluctance motor. The conventional structure is intended to utilize the reluctance torque by arranging the cores in multi-staged, and increasing the difference between the d-axis reluctance and the q-axis reluctance. However, the multi-staged cores increase the number of bridges, or the circumferential width of the bridge. This may interfere with sufficient increase in the difference between the d-axis reluctance and the q-axis reluctance.

On the contrary, the structure of the example allows the circumferential width between the first bridge 51 and the second bridge 52 to be narrowed. It is possible to increase the difference between the d-axis reluctance and the q-axis reluctance, allowing utilization of the reluctance torque. This may accomplish the large motor torque, high efficiency, and compact size.

Example 3

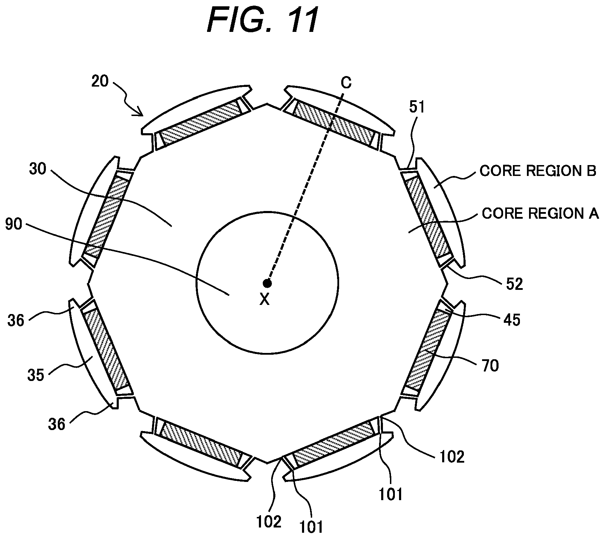

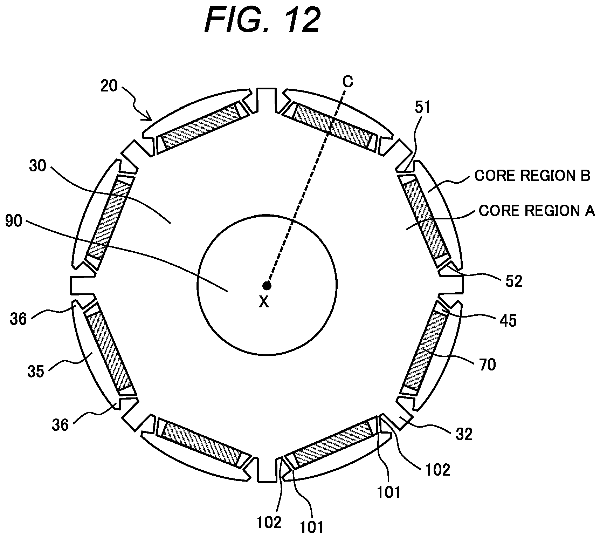

An explanation will be made with respect to Example 1 according to the present invention referring to Figures 11 and 12. Figures 11 and 12 are sectional views each showing the plane perpendicular to the rotary shaft of the rotor of Example 1 according to the present invention. Explanations overlapped with those of Examples 1 and 2 will be omitted.

Referring to Figures 11 and 12, each of the magnetic poles has at least one magnet insertion hole 45. The magnet insertion hole 45 accommodates a permanent magnet 70 for forming the magnetic pole.

The rotor core 30 includes the core region A formed at the inner circumferential side to the magnet insertion hole 45, and the core region B disposed at the outer circumferential side to the magnet insertion hole 45. The core region A and the core region B of each of the magnetic poles are mechanically connected with at least two bridges, that is, the first bridge 51 and the second bridge 52 which are circumferentially separated from the magnetic pole center C interposed between the bridges.

The permanent magnet made of arbitrary type may be used, for example, the ferrite based, the neodymium-based, the samarium-cobalt based, and the like. In the example, the rectangular permanent magnet is used. However, the arc-shaped permanent magnet may also be used. It is also possible to execute injection molding of the bond magnet into the magnet insertion hole 45. Furthermore, the permanent magnet 70 may be formed to have the split laminated structure in the direction of the rotary shaft.

Each magnetic pole is constituted by the single permanent magnet 70. As Figure 12 shows, the q-axis core 32 may be formed at the outermost circumference of the core region A through which the q-axis passes. As the q-axis core 32 passes the magnetic flux, the q-axis inductance becomes large. This allows utilization of the reluctance torque.

Like Examples 1 and 2, Example 1 establishes the relations of L2 < L1 and L2 < L3. Assuming that an angle at the side of the magnetic pole center C formed by the first bridge 51 and a boundary surface of the magnet insertion hole 45 at the inner circumferential side of the core region B (hereinafter referred to as an inner circumferential surface) is designated as θ1, and an angle at the side of the magnetic pole center C formed by the second bridge 52 and the inner circumferential surface of the core region B is designated as θ2, each of the angles θ1 and θ2 is obtuse, thus establishing the relations of θ1 > 90°, θ2 > 90°.

As for the shape of the core region B, any one of the inner circumferential end and the outer circumferential end of the core region B may be longer. The L3 is defined as the distance between the circumferential ends of the core region B either at the inner circumferential side or the outer circumferential side whichever is longer. The first bridge 51 and the second bridge 52 are substantially rectangular with constant radial width. However, they may be arc-like shaped, or formed into the shape with variable radial width.

Upon rotation of the rotor 20 of the rotary electric machine of Example 1, the centrifugal force is applied not only to the rotor core 30 but also to the respective parts of the permanent magnet 70. The permanent magnet 70 works to separate the core region B from the core region A by applying the load to the core region B. Accordingly, the centrifugal action of the permanent magnet 70 may be regarded as the increase in the centrifugal force to the core region B. Basically, the stress distribution becomes similar to that of Example 1.

In the structure of Example 1, the bending moment M, and the shear forces P, Q are balanced to reduce the formulae 1 and 2, and to approximate to the formula 3 so that the bending stress applied to the first bridge 51 and the second bridge 52 is reduced. It is therefore possible to narrow the radial width of the first bridge 51 and the second bridge 52, and reduce the leakage flux from the first bridge 51 and the second bridge 52.

As the leakage flux from the first bridge 51 and the second bridge 52 may be reduced, compared with the conventional structure for outputting the same motor torque, it is possible to accomplish the cost reduction by reducing volume of the permanent magnet, and the high efficiency by reducing current. Alternatively, in the case of the same volume of the permanent magnet, the same amperage as those of the conventional structure, the magnet torque in the same configuration is increased by increase in armature interlinkage flux of the permanent magnet 70, and the reluctance torque is increased by reduction in the d-axis inductance. The resultant increase in the motor torque allows the rotary electric machine to have the compact structure with the same motor torque.

The increase in the armature interlinkage flux of the permanent magnet 70 improves the induced electromotive force as well as the power factor.

Especially, when the rectangular parallelepiped shaped permanent magnet 70 is arranged so that its short axis is substantially parallel to the straight line on the magnetic pole center C, the volume of the permanent magnet may be reduced, or the cost may be reduced owing to the volume reduction. Conventionally, since reduction in the volume of the permanent magnet has decreased the magnet torque, the motor torque reduction or efficiency deterioration as a result of current increase have been unavoidable.

On the contrary, the structure of the example allows reduction in the leakage flux from the first bridge 51 and the second bridge 52. Compared with the conventional structure, the armature interlinkage flux may be increased even when reducing the volume of the permanent magnet. Accordingly, it is possible to increase the motor torque by increase in the magnet torque, or improve efficiency by reduction in current.

Generally, increase in the armature interlinkage flux causes the core region B to be magnetically saturated over a wide range. This may cause the risk of lowering the q-axis inductance. Meanwhile, in the structure having the permanent magnet 70 arranged as described in the example, the permanent magnet 70 is not embedded deeply in the inner circumferential side of the core region A. Therefore, the path of the magnetic flux passing through the core region A is likely to be formed. It is therefore possible to increase the q-axis inductance. Accordingly, the reluctance torque is not lowered in spite of the magnetic saturation in the core region B over the wide range.

As a result, the reluctance torque, that is, the motor torque is hardly lowered even if the core region B becomes likely to be magnetically saturated by size reduction. It is therefore possible to highly densify both the torque and the output of the rotary electric machine 1.

Example 4

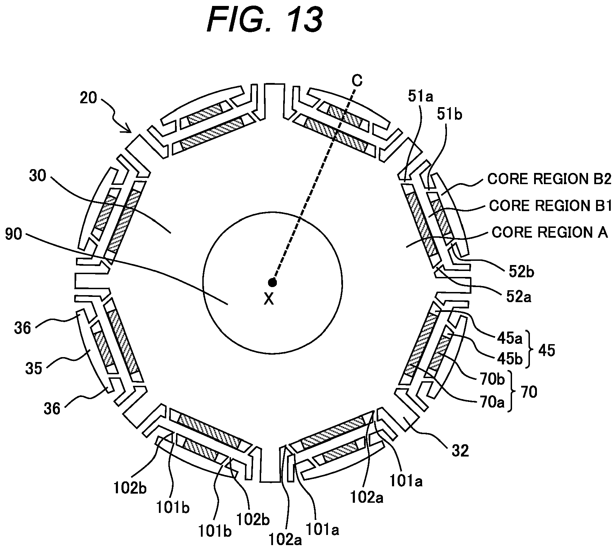

An explanation will be made with respect to Example 1 according to the present invention referring to Figure 13. Figure 13 is a sectional view of the plane perpendicular to the rotary shaft of the rotor of Example 1 according to the present invention. Explanations overlapped with those of Examples 1 to 3 will be omitted.

As Figure 13 shows, the core region B and the magnet insertion holes 45 may be in a radially multi-layered arrangement. A plurality of magnet insertion holes 45a, 45b are formed at the radial outer circumferential side of the core region A while being in the radially multi-layered arrangement. A plurality of the core regions B1, B2 are formed at the radial outer circumferential side of the magnet insertion holes 45a, 45b while being in the radially multi-layered arrangement. The magnet insertion holes 45a, 45b accommodate the permanent magnets 70a, 70b, respectively. In the example, the magnetic poles are constituted by the plurality of permanent magnets 70a, 70b. Furthermore, the plurality of q-axis cores 32 are formed, each protruding radially to the outer circumferential side between the adjacent core regions B.

Furthermore, the first bridges 51 (51a, 51b) and the second bridges 52 (52a, 52b) are radially in a multi-staged arrangement. Additionally, the connected portions 101 (101a, 101b) and the connected portions 102 (102a, 102b) are also radially in the multi-staged arrangement.

In Example 1, the first bridge 51b and the second bridge 52b are separated while having the magnetic pole center C interposed therebetween. Assuming that the distance between the connected portions 102b of the first bridge 51b and the second bridge 52b to the core region B1 is designated as L1, and the distance between the connected portions 101b of the first bridge 51b and the second bridge 52b to the core region B2 is designated as L2, in the structure of the example, the distance L2 is shorter than the distance L1, establishing the relation of L2 < L1.

Assuming that an angle at the side of the magnetic pole center C formed by the first bridge 51b and a boundary surface of the magnet insertion hole 45b at the inner circumferential side of the core region B2 (hereinafter referred to as an inner circumferential surface) is designated as θ1, and an angle at the side of the magnetic pole center C formed by the second bridge 52b and the inner circumferential surface of the core region B2 is designated as θ2, each of the angles θ1 and θ2 is obtuse, establishing the relations of θ1 > 90°, θ2 > 90°.

Additionally, assuming that a distance between the circumferential ends of the core region B2 is designated as L3, the distance L2 is shorter than the distance L3, thus establishing the relation of L2 < L3.

In the example, in addition to the above-defined distances L1, L2, L3, and angles θ1, θ2, the distance between the connected portions 102a of the first bridge 51a and the second bridge 52a while being separated from the magnetic pole center C interposed therebetween to the core region A may be designated as L1, the distance between the connected portions 101a of the first bridge 51a and the second bridge 52a to the core region B1 may be designated as L2, and the distance between the circumferential ends of the core region B1 may be designated as L3. An angle at the side of the magnetic pole center C formed by the first bridge 51a and a boundary surface of the magnet insertion hole 45a at the inner circumferential side of the core region B1 (hereinafter referred to as an inner circumferential surface) may be designated as θ1, and an angle at the side of the magnetic pole center formed by the second bridge 52a and the inner circumferential surface of the core region B1 may be designated as θ2. As for the shape of the core region B1, one of the inner circumferential end and the outer circumferential end may be longer. The L3 is defined as the distance between the circumferential ends of the core region B1 either at the inner circumferential side or the outer circumferential side whichever is longer. In this case, relations among the defined distances L1, L2, L3 and the angles θ1, θ2, specifically, L2 < L1, θ1 > 90°, θ2 > 90°, and L2 < L3 are established.

Similarly, if the first bridge 51 and the second bridge 52 are formed, the distances L1, L2, L3, and the angles θ1, θ2 may be defined for any of the core regions B and the magnet insertion holes 45.

The effect of the example may be obtained for at least one of the core regions B and one of the magnet insertion holes 45 so long as the relations of L2 < L1, θ1 > 90°, θ2 > 90°, L2 < L3 are established.

The structure having the first bridges 51 and the second bridges 52 radially in multi-staged arrangement as shown in Figure 13 has been generally used as the synchronous reluctance motor. The conventional structure is intended to utilize the reluctance torque by arranging the cores in multi-staged, and increasing the difference between the d-axis reluctance and the q-axis reluctance. However, the multi-staged cores increase the number of bridges, or the circumferential width of the bridge. This may interfere with sufficient increase in the difference between the d-axis reluctance and the q-axis reluctance.

On the contrary, the structure of the example allows the circumferential width between the first bridge 51 and the second bridge 52 to be narrowed. It is possible to increase the difference between the d-axis reluctance and the q-axis reluctance, allowing utilization of the reluctance torque. This may accomplish the large motor torque, high efficiency, and compact size.

Referring to the structure as shown in Figure 13, the plurality of q-axis cores 32 each protruding radially to the outer circumferential side are disposed between the adjacent core regions B.

The q-axis core 32 at the outermost circumference of the core region A has a larger q-axis inductance for passing the magnetic flux, allowing utilization of the reluctance torque. In the conventional structure having the radial width between the first bridge 51 and the second bridge 52 widened, the width of the q-axis core 32 is narrowed. The reluctance torque, thus, cannot be sufficiently utilized.

Meanwhile, in the structure of the example, the radial width between the first bridge 51 and the second bridge 52 may be narrowed so that the width of the q-axis core 32 may be widened. The effect of reducing the leakage flux from the first bridge 51 and the second bridge 52 further reduces the d-axis inductance. Accordingly, in the example, the reluctance torque is increased to secure the large motor torque.

Example 5

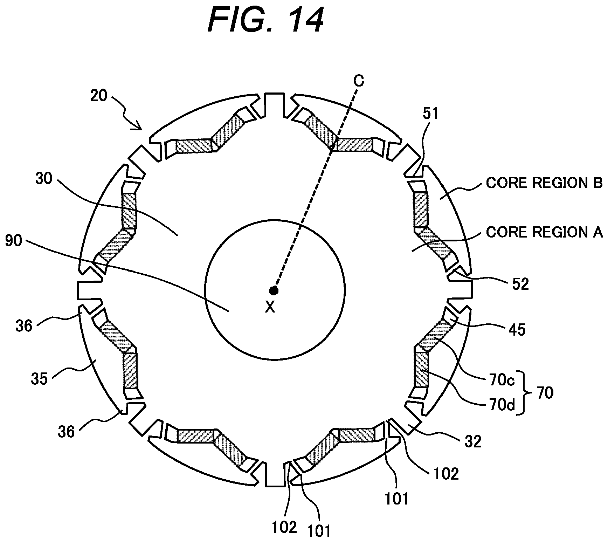

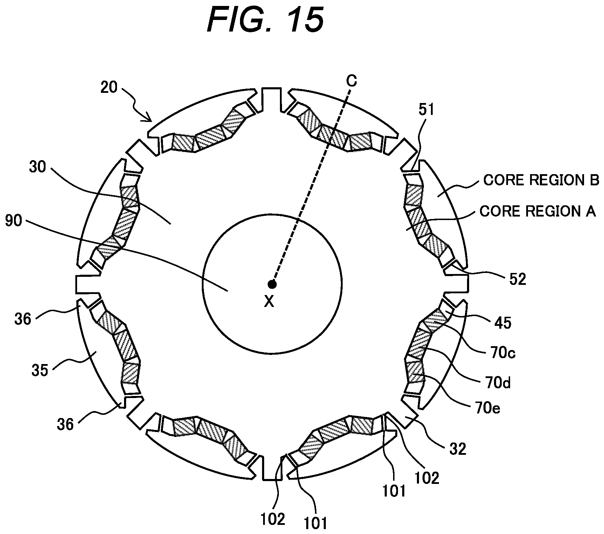

An explanation will be made with respect to Example 1 according to the present invention referring to Figures 14 and 15. Figures 14 and 15 are sectional views each showing the plane perpendicular to the rotary shaft of the rotor of Example 1 according to the present invention. Explanations overlapped with those of Examples 1 to 4 will be omitted.

Referring to Figures 14 and 15, in the example, a plurality of divided permanent magnets 70 (70c, 70d) are arranged for the single magnetic pole. Referring to Figure 14, the permanent magnets 70c, 70d are disposed in a V-like arrangement while opening toward the outer circumferential side. Referring to Figure 15, the permanent magnets 70c, 70d, 70d are disposed in a U-like arrangement while opening toward the outer circumferential side.

The use of the permanent magnet 70 causes the problem of heat loss owing to eddy current. Especially when the rotor is rotated at high speeds, frequency of the variable magnetic field applied to the magnet is increased, leading to increase in the heat loss. The plurality of divided permanent magnets (70c, 70d) to be inserted into the magnet insertion holes 45 are arranged for the purpose of reducing the generated heat loss owing to eddy current (Figure 15 shows the permanent magnets 70c, 70d, 70e).

Like Examples 1 to 4, this example establishes the relations of L2 < L1, L2 < L3, and θ1 > 90°, θ2 > 90°.

The plurality of q-axis cores 32 each protruding radially to the outer circumferential side are disposed between the adjacent core regions B.

The effects derived from the example are similar to those described in Examples 1 to 4.

Example 6

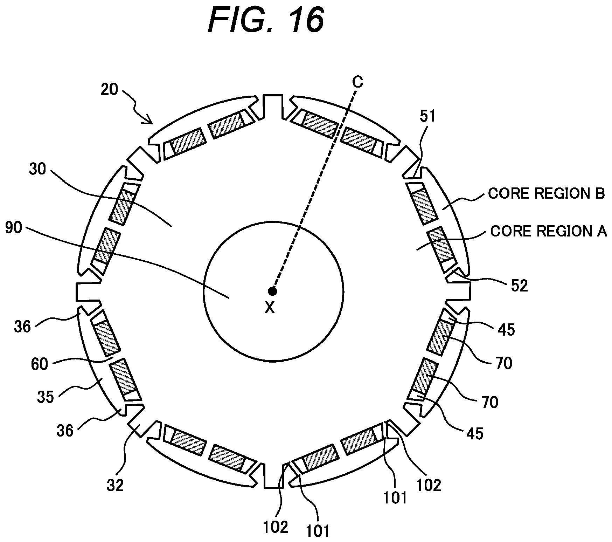

An explanation will be made with respect to Example 1 according to the present invention referring to Figure 16. Figure 16 is a sectional view showing the plane perpendicular to the rotary shaft of the rotor of Example 1 according to the present invention. Explanations overlapped with those of Examples 1 to 5 will be omitted.

Referring to Figure 16, at least one bridge 60 is formed on the magnetic pole center C in the magnet insertion hole 45 of each of the respective magnetic poles. The bridge 60 divides the magnet insertion hole 45. The permanent magnet 70 is stored in at least one of the divided magnet insertion holes 45. Referring to Figure 16, the permanent magnets 70 are stored in all the magnet insertion holes 45. The magnet insertion hole 45 may be formed as the hole 40 which stores no permanent magnet 70. All the magnet insertion holes 45 may be the holes 40 in unoccupied states.

In the example, the bridge 60 is formed along the magnetic pole center C so that three bridges including the bridge 60 in addition to the first bridge 51 and the second bridge 52 serve to mechanically support the core region B with the core region A.

The first bridge 51 and the second bridge 52 are separated circumferentially from the magnetic pole center C, by which the bending stress is generated. Since the bridge 60 is located on the magnetic pole center C, substantially no bending stress is generated in the bridge 60, but tensile stress is only generated. The centrifugal force to the core region B is mainly supported with the bridge 60, and the first bridge 51 and the second bridge 52 are used supplementarily so that the total value of the circumferential widths of three bridges including the bridge 60 in addition to the first bridge 51 and the second bridge 52 may be made smaller than the total circumferential width of the first bridge 51 and the second bridge 52. This makes it possible to reduce the leakage flux from the bridges.

Like Examples 1 to 5, this example establishes the relations of L2 < L1, L2 < L3, and θ1 > 90°, θ2 > 90°.

The plurality of q-axis cores 32 each protruding radially to the outer circumferential side are formed between the adjacent core regions B of the plurally provided core regions B.

The effects derived from the example are similar to those described in Examples 1 to 5.

Example 7

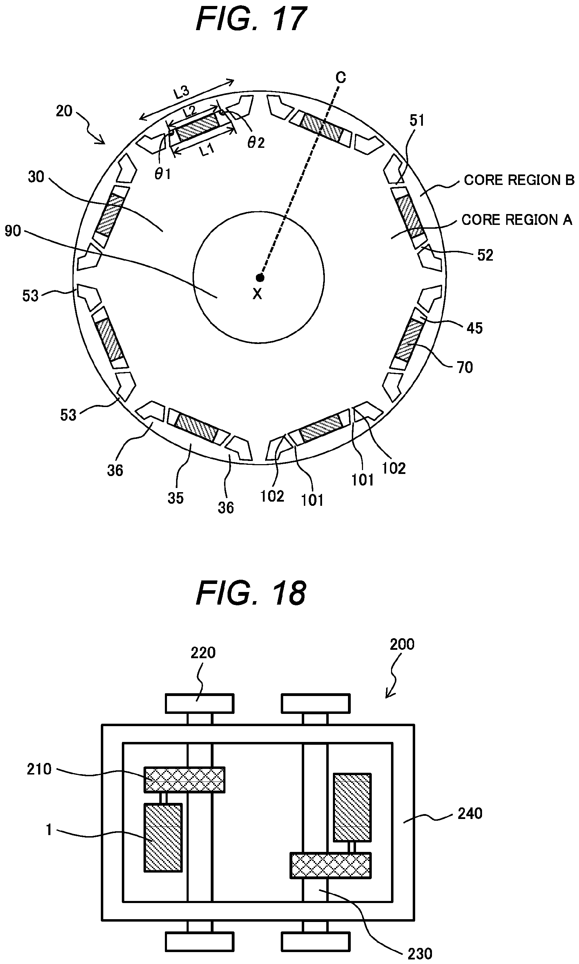

An explanation will be made with respect to Example 1 according to the present invention referring to Figure 17. Figure 17 is a sectional view of the plane perpendicular to the rotary shaft of the rotor of Example 1 according to the present invention. Explanations overlapped with those of Examples 1 to 6 will be omitted.

Referring to Figure 17, in the example, a third bridge 53 is formed for mechanically connecting the core region A and the outermost circumference of the core regions B.

This allows smooth air flow above the surface of the rotor 20 in rotation. The mechanical loss owing to air friction may be reduced, improving the efficiency. As the wind noise generated by the rotor 20 is reduced, the motor noise may also be reduced. Furthermore, in the case of two bridges including the first bridge 51 and the second bridge 52, or three bridges including the first bridge 51, the second bridge 52, and the bridge 60, those bridges may be bent upon application of the force of inertia in the circumferential direction to the core region B as a result of acceleration or deceleration of rotation of the rotor 20. The elastic force of the third bridge 53 is capable of supporting the core region B to reduce the risk of bending the other bridge.

Like Examples 1 to 6, this example establishes the relations of L2 < L1, L2 < L3, and θ1 > 90°, θ2 > 90°.

The plurality of q-axis cores 32 each protruding radially to the outer circumferential side are formed between the adjacent core regions B.

The effects derived from the example are similar to those described in Examples 1 to 6.

Example 8

An explanation will be made with respect to Example 1 according to the present invention referring to Figure 18. Figure 18 is a schematic view of a motor vehicle provided with the rotary electric machine of Example 1 according to the present invention. Explanations overlapped with those of Examples 1 to 7 will be omitted

A railway vehicle and a high-speed vehicle may be exemplified as the motor vehicle. Referring to Figure 18, a motor vehicle 200 includes a car 240 provided with a gear 210, wheels 220, axles 230, and the rotary electric machine 1. The rotary electric machine 1 drives the wheels 220 connected to the axles 230 via the gear 210. In this example, 2 units of the rotary electric machines 1 are mounted. However, it is possible to mount the single unit or 3 or more units of the rotary electric machines.

The rotor 20 of the rotary electric machine 1 is capable of reducing the bending stress generated in the first bridge 51 and the second bridge 52, improving the mechanical strength thereof. The rotary electric machine 1 may be configured to be adaptable to the high-speed rotation.

The rotary electric machine 1 of the example is applicable to the motor vehicle 200 as the railway vehicle or the high speed vehicle. The rotary electric machine 1 used for the motor vehicle 200 may be made highly efficient and compact. In this example, application of the highly efficient rotary electric machine 1 to the motor vehicle 200 allows reduction in power to be consumed by the rotary electric machine 1. It is possible to obtain the effect of reducing power consumed by the motor vehicle 200.

In this example, application of the compact rotary electric machine 1 allows enlargement of the space of the motor vehicle 200 under the floor. This makes it possible to improve flexibility in the layout of the motor vehicle 200 under the floor.

In the example, weight of the motor vehicle 200 may be reduced.


Reference Signs List

| | |
|---|---|
| 1... | rotary electric machine, |
| 10... | stator, |
| 11... | stator winding, |
| 15... | frame, |
| 20... | rotor, |
| 30... | rotor core, |
| 32... | q-axis core, |
| 35... | core at the side of magnetic pole center C, |
| 36... | core at the side of q-axis, |
| 40... | hole, |
| 40a... | hole, |
| 40b... | hole, |
| 45... | magnet insertion hole, |
| 45a... | magnet insertion hole, |
| 45b... | magnet insertion hole, |
| 51... | first bridge, |
| 51a... | first bridge, |
| 51b... | first bridge, |
| 52... | second bridge, |
| 52a... | second bridge, |
| 52b... | second bridge, |
| 53... | third bridge, |
| 60... | bridge, |
| 70... | permanent magnet, |
| 70a... | permanent magnet, |
| 70b... | permanent magnet, |
| 70c... | permanent magnet, |
| 70d... | permanent magnet, |
| 70e... | permanent magnet, |
| 90... | shaft |
| 100... | gap |
| 101... | connected portion, |
| 101a... | connected portion, |
| 101b... | connected portion, |
| 102... | connected portion, |
| 102a... | connected portion, |

102b...   connected portion,
200...    motor vehicle,
210...    gear,
220...    wheel,
230...    axle,
240...    car


**Claims**

1.  A rotary electric machine comprising a stator, a rotor provided with a rotor core formed of a magnetic body, and a shaft fixed to the rotor,
    wherein the rotor core has at least one hole for a single magnetic pole disposed circumferentially, a core region A disposed at an inner circumferential side to the hole, and a core region B disposed at an outer circumferential side to the hole,
    the core region A and the core region B are mechanically connected with at least two bridges including a first bridge and a second bridge, the two bridges being circumferentially separated from a magnetic pole center,
    when setting a distance between connected portions of the first bridge and the second bridge to the core region A to L1, and a distance between connected portions of the first bridge and the second bridge to the core region B to L2, a relation of L2 < L1 is satisfied,
    when setting an angle at a side of the magnetic pole center formed by the first bridge and an inner circumferential surface of the core region B to $\theta 1$, and an angle at the side of the magnetic pole center formed by the second bridge and the inner circumferential surface of the core region B to $\theta 2$, relations of $\theta 1 > 90°$, $\theta 2 > 90°$ are satisfied, and
    when setting a distance between circumferential ends of the core region B to L3, a relation of L2 < L3 is satisfied.

2.  A rotary electric machine comprising a stator, a rotor provided with a rotor core formed of a magnetic body, and a shaft fixed to the rotor,
    wherein the rotor core has at least one magnet insertion hole for a single magnetic pole disposed circumferentially, a core region A disposed at an inner circumferential side to the magnet insertion hole, and a core region B disposed at an outer circumferential side to the magnet insertion hole,
    a permanent magnet is inserted into the magnet insertion hole,
    the core region A and the core region B are mechanically connected with at least two bridges including a first bridge and a second bridge, the two bridges being circumferentially separated from a magnetic pole center,
    when setting a distance between connected portions of the first bridge and the second bridge to the core region A to L1, and a distance between connected portions of the first bridge and the second bridge to the core region B to L2, a relation of L2 < L1 is satisfied,
    when setting an angle at a side of the magnetic pole center formed by the first bridge and an inner circumferential side of the core region B to $\theta 1$, and an angle at the side of the magnetic pole center formed by the second bridge and the inner circumferential surface of the core region B to $\theta 2$, relations of $\theta 1 > 90°$, $\theta 2 > 90°$ are satisfied, and
    when setting a distance between circumferential ends of the core region B to L3, a relation of L2 < L3 is satisfied.

3.  The rotary electric machine according to claim 2, wherein a bridge is formed on the magnetic pole center in the magnet insertion hole.

4.  The rotary electric machine according to claim 2 or 3,
    wherein the permanent magnet has substantially a rectangular parallelepiped shape, and has a short axis substantially parallel to a line of the magnetic pole center.

5.  The rotary electric machine according to any one of claims 2 to 4,
    wherein a third bridge for connecting the core region A and an outermost circumferential surface of the core region B is formed.

6.  The rotary electric machine according to claim 1 or 2,
    wherein a plurality of core regions B are provided, and each of a plurality of q-axis cores protruding radially to an outer circumferential side is disposed between the core regions B which are adjacent to each other.

7.  The rotary electric machine according to claim 1,
    wherein a plurality of holes are formed radially in a multi-layered arrangement.

8. The rotary electric machine according to claim 2, wherein a plurality of magnet insertion holes are formed radially in a multi-layered arrangement.

9. The rotary electric machine according to claim 6,
   wherein the plurality of core regions B are formed radially in a multi-layered arrangement.

10. The rotary electric machine according to any one of claims 7 to 9,
    wherein the first and the second bridges are formed radially in a multi-staged arrangement.

11. The rotary electric machine according to claim 2,
    wherein the permanent magnet to be inserted into the magnet insertion hole is divided into a plurality of divided permanent magnets.

12. The rotary electric machine according to claim 11,
    wherein the permanent magnets are disposed in a V-like or a U-like arrangement while opening toward the outer circumferential side.

13. A motor vehicle comprising a rotary electric machine, a wheel, a gear, and a car, the rotary electric machine driving the wheel via the gear,
    wherein the rotary electric machine is structured according to any one of claims 1 to 12.


**Amended claims under Art. 19.1 PCT**

1. (amended) A rotary electric machine comprising a stator, a rotor provided with a rotor core formed of a magnetic body, and a shaft fixed to the rotor,
   wherein the rotor core has at least one hole for a single magnetic pole disposed circumferentially, a core region A disposed at an inner circumferential side to the hole, and a core region B disposed at an outer circumferential side to the hole,
   the core region A and the core region B are mechanically connected with at least two bridges including a first bridge and a second bridge, the two bridges being circumferentially separated from a magnetic pole center,
   when setting a distance between connected portions of the first bridge and the second bridge to the core region A to L1, and a distance between connected portions of the first bridge and the second bridge to the core region B to L2, a relation of L2 < L1 is satisfied,
   when setting an angle at a side of the magnetic pole center formed by the first bridge and an inner circumferential surface of the core region B to $\theta1$, and an angle at the side of the magnetic pole center formed by the second bridge and the inner circumferential surface of the core region B to $\theta2$, relations of $\theta1 > 90°$, $\theta2 > 90°$ are satisfied, and
   when setting a distance between circumferential ends of the core region B to L3, a relation of L2 < L3 is satisfied to allow the core regions B to be at both circumferential sides of the connected portions of the first bridge and the second bridge to the core region B, respectively.

2. (amended) A rotary electric machine comprising a stator, a rotor provided with a rotor core formed of a magnetic body, and a shaft fixed to the rotor,
   wherein the rotor core has at least one magnet insertion hole for a single magnetic pole disposed circumferentially,
   a core region A disposed at an inner circumferential side to the magnet insertion hole, and a core region B disposed at an outer circumferential side to the magnet insertion hole,
   a permanent magnet is inserted into the magnet insertion hole,
   the core region A and the core region B are mechanically connected with at least two bridges including a first bridge and a second bridge, the two bridges being circumferentially separated from a magnetic pole center,
   when setting a distance between connected portions of the first bridge and the second bridge to the core region A to L1, and a distance between connected portions of the first bridge and the second bridge to the core region B to L2, a relation of L2 < L1 is satisfied,
   when setting an angle at a side of the magnetic pole center formed by the first bridge and an inner circumferential side of the core region B to $\theta1$, and an angle at the side of the magnetic pole center formed by the second bridge and the inner circumferential surface of the core region B to $\theta2$, relations of $\theta1 > 90°$, $\theta2 > 90°$ are satisfied, and
   when setting a distance between circumferential ends of the core region B to L3, a relation of L2 < L3 is satisfied to allow the core regions B to be at both circumferential sides of the connected portions of the first bridge and the second bridge to the core region B, respectively.

3. (added) A rotary electric machine comprising a stator, a rotor provided with a rotor core formed of a magnetic body, and a shaft fixed to the rotor,

wherein the rotor core has at least one hole for a single magnetic pole disposed circumferentially, a core region A disposed at an inner circumferential side to the hole, and a core region B disposed at an outer circumferential side to the hole,

the core region A and the core region B are mechanically connected with at least two bridges including a first bridge and a second bridge, the two bridges being circumferentially separated from a magnetic pole center,

when setting a distance between connected portions of the first bridge and the second bridge to the core region A to L1 as the distance derived from connecting circumferential ends of those constituting each radial width of the first bridge and the second bridge, the circumferential ends being at a side opposite the circumferential ends constituting the hole, and a distance between connected portions of the first bridge and the second bridge to the core region B to L2 as the distance derived from connecting circumferential ends of those constituting each radial width of the first bridge and the second bridge, the circumferential ends being at a side opposite the circumferential ends constituting the hole, a relation of L2 < L1 is satisfied,

when setting an angle at a side of the magnetic pole center formed by the first bridge and an inner circumferential surface of the core region B to θ1, and an angle at the side of the magnetic pole center formed by the second bridge and the inner circumferential surface of the core region B to θ2, relations of θ1 > 90°, θ2 > 90° are satisfied, and when setting a distance between circumferential ends of the core region B to L3, a relation of L2 < L3 is satisfied.

4. (amended) The rotary electric machine according to claim 2, wherein a bridge is formed on the magnetic pole center in the magnet insertion hole.

5. (amended) The rotary electric machine according to claim 2 or 4, wherein the permanent magnet has substantially a rectangular parallelepiped shape, and has a short axis substantially parallel to a line of the magnetic pole center.

6. (amended) The rotary electric machine according to any one of claim 2, 4, and 5,
wherein a third bridge for connecting an outermost circumferential surfaces of the core region A and the core region B is formed.

7. (amended) The rotary electric machine according to any one of claims 1 to 3,
wherein a plurality of core regions B are provided, and each of a plurality of q-axis cores protruding radially to an outer circumferential side is disposed between the core regions B which are adjacent to each other.

8. (amended) The rotary electric machine according to claim 1 or 3,
wherein a plurality of holes are formed radially in a multi-layered arrangement.

9. (amended) The rotary electric machine according to claim 2,
wherein a plurality of magnet insertion holes are formed radially in a multi-layered arrangement.

10. (amended) The rotary electric machine according to claim 7,
wherein the plurality of core regions B are formed radially in a multi-layered arrangement.

11. (amended) The rotary electric machine according to any one of claims 8 to 10,
wherein the first and the second bridges are formed radially in a multi-staged arrangement.

12. (amended) The rotary electric machine according to claim 2,
wherein the permanent magnet to be inserted into the magnet insertion hole is divided into a plurality of divided permanent magnets.

13. (amended) The rotary electric machine according to claim 12,
wherein the permanent magnets are disposed in a V-like or a U-like arrangement while opening toward the outer circumferential side.

14. (amended) A motor vehicle comprising a rotary electric machine, a wheel, a gear, and a car, the rotary electric machine driving the wheel via the gear,
wherein the rotary electric machine is structured according to any one of claims 1 to 13.

**Statement under Art. 19.1 PCT**

Claims 1 and 2 have been amended by supplementarily modifying the description "a relation of L2 < L3 is satisfied" into "a relation of L2 < L3 is satisfied to allow the core regions B to be at both circumferential sides of the connected portions of the first bridge and the second bridge to the core region B, respectively". Claim 3 has been newly added. Claims 4 to 14 after amendment correspond to Claims 3 to 13 before amendment, respectively. Because of newly added Claim 3, the dependency of the claims has been amended.

Amendment of Claims 1 and 2 is based on the description of paragraph [0045] in the original specification, and Figure 3.

Addition of Claim 3 is based on Claim 1 before amendment, the description of paragraph [0028] in the original specification, and Figure 3.

EP 3 700 062 A1

# FIG. 1

# FIG. 2

# FIG. 3

# FIG. 4

## FIG. 5

## FIG. 6

## FIG. 7

## FIG. 8

# FIG. 9

| No. | STRUCTURE | SHEAR FORCE P | SHEAR FORCE Q | BENDING MOMENT M | TENSILE FORCE T1 | TENSILE FORCE T2 |
|---|---|---|---|---|---|---|
| (1) | L2<L1<br>$\theta 1 > 90°$<br>$\theta 2 > 90°$ | DECREASED | INCREASED | — | DECREASED | INCREASED |
| (2) | L2<L3 | DECREASED | — | DECREASED | — | DECREASED |

# FIG. 10

COMPARATIVE EXAMPLE

51

MAXIMUM STRESS POINT : 1pu

52

EXAMPLE

51

MAXIMUM STRESS POINT : 0.45pu

52

## FIG. 11

# FIG. 12

CORE REGION B

CORE REGION A

# FIG. 13

# FIG. 14

CORE REGION B

CORE REGION A

# FIG. 15

CORE REGION B

CORE REGION A

# FIG. 16

## FIG. 17

CORE REGION B
CORE REGION A

## FIG. 18

## INTERNATIONAL SEARCH REPORT

| International application No. |
| --- |
| PCT/JP2018/031006 |

**A. CLASSIFICATION OF SUBJECT MATTER**
Int. Cl. H02K1/27(2006.01)i, H02K1/22(2006.01)i, H02K21/14(2006.01)i

According to International Patent Classification (IPC) or to both national classification and IPC

**B. FIELDS SEARCHED**

Minimum documentation searched (classification system followed by classification symbols)
Int. Cl. H02K1/27, H02K1/22, H02K21/14

Documentation searched other than minimum documentation to the extent that such documents are included in the fields searched
Published examined utility model applications of Japan       1922-1996
Published unexamined utility model applications of Japan     1971-2018
Registered utility model specifications of Japan             1996-2018
Published registered utility model applications of Japan     1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014-233135 A (AISIN SEIKI CO., LTD.) 11 | 2 |
| Y | December 2014, fig. 1, 3 & EP 2709241 A2, fig. 1, | 3-6, 11-13 |
| A | 3 | 1, 7-10 |
| Y | JP 2013-126330 A (TOYOTA BOSHOKU CORP.) 24 June 2013, fig. 3, paragraph [0017] (Family: none) | 3-6, 11-13 |
| Y | JP 2012-80718 A (HONDA MOTOR CO., LTD.) 19 April 2012, fig. 3 (Family: none) | 6, 13 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12.10.2018 | 23.10.2018 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI9163648 B
- JP 2013236418 A

- JP 2011097783 A
- JP 2014057392 A